# EUROPÄISCHE PATENTSCHRIFT

(11) **EP 2 024 080 B1**
(45) Veröffentlichungstag und Bekanntmachung des Hinweises auf die Patenterteilung: **01.09.2010**
(21) Anmeldenummer: 07724643.7
(22) Anmeldetag: 27.04.2007
(51) Int. Cl.: B01J 19/08

(54) **VERFAHREN UND VORRICHTUNG ZUR BEHANDLUNG VON SCHÜTTGUT MIT EINEM PHYSIKALISCHEN PLASMA BEI ATMOSPHÄRENDRUCK**
METHOD AND DEVICE FOR TREATING BULK MATERIAL WITH A PHYSICAL PLASMA AT ATMOSPHERIC PRESSURE
PROCÉDÉ ET DISPOSITIF POUR TRAITER DES PRODUITS EN VRAC AU MOYEN D'UN PLASMA PHYSIQUE SOUS PRESSION ATMOSPHÉRIQUE

(30) Priorität: 28.04.2006 DE 102006020484
(43) Veröffentlichungstag der Anmeldung: 18.02.2009
(73) Patentinhaber: Fachhochschule Hildesheim / Holzminden / Göttingen, 31134 Hildesheim (DE)
(72) Erfinder: VIÖL, Wolfgang, 37139 Adelebsen (DE); AVRAMIDIS, Georg, 37085 Göttingen (DE); WASCHER, Richard, 37083 Göttingen (DE)
(74) Vertreter: Rehberg, Bernhard Frank
(86) Internationale Anmeldenummer: PCT/EP2007/003713
(87) Internationale Veröffentlichungsnummer: WO 2007/124921

(56) Entgegenhaltungen:
- WO-A-97/33939
- DE-A1- 4 227 631
- DE-A1-102004 048 410
- DE-A1-102004 048 411
- DE-C1- 4 434 767
- DE-U1-202004 021 021
- DE-U1-202004 021 022
- US-A- 4 737 885
- US-B1- 6 543 460

## Beschreibung

### TECHNISCHES GEBIET DER ERFINDUNG

Die Erfindung betrifft ein Verfahren zur Behandlung von Schüttgut mit einem physikalischen Plasma bei Atmosphärendruck und eine hierzu einsetzbare Vorrichtung mit den Merkmalen des Oberbegriffs des Patentanspruchs 5.

Beim dem zu behandelnden Schüttgut kann es sich z. B. um Saatgut handeln. Die vorliegende Erfindung ist jedoch ausdrücklich nicht auf die Behandlung von Saatgut als Schüttgut beschränkt. Sie umfasst beispielsweise auch die Behandlung von Teilchen oder Partikeln, aus denen anschließend unter Zusatz von Bindemittel und/oder anderer Teilchen Formkörper ausgebildet werden.

### STAND DER TECHNIK

Aus der US 6,543,460 B1 ist es bekannt, Saatgut mit einem kalten Plasma in einer Reaktionskammer zu behandeln, um die Oberfläche der Körner des Saatguts zu ätzen. Auf diese Weise sollen Oberflächenmaterialien, wie beispielsweise Fungizide und Insektizide entfernt und/oder die Oberflächen desinfiziert werden. Diese Plasmabehandlung erfolgt unter Verwendung von Ätzgasen, die das Saatgut nicht schädigen sollen, und für ausgewählte Zeiträume, die zwar ausreichend sind, um die Oberflächenmaterialien zu entfernen, aber nicht so lang, dass die Lebensfähigkeit des Saatguts durch die Behandlung beeinträchtigt wird. Diese bekannte Plasmabehandlung erfolgt bei reduziertem Druck, bei dem das Plasma durch direkte Gasentladungen zwischen einer Elektrode, an die eine hochfrequente Wechselhochspannung angelegt wird, und einer geerdeten Gegenelektrode erzeugt wird. Dabei ist es vorgesehen, ein Reaktionsrohr, in dem die Gasentladung hervorgerufen wird, um seine horizontale Achse zu drehen, um das Saatgut allseitig zu behandeln.

Durch die bekannte Plasmabehandlung von Saatgut ist die Keimfähigkeit des Saatguts verbesserbar. Sie ist jedoch aufwändig, komplex und nur für kleine Mengen an Saatgut geeignet. Das Saatgut muss in einen evakuierten Bereich eingeschleust und aus diesem wieder ausgeschleust werden, in dem der Unterdruck herrscht, bei dem die Gasentladung hervorgerufen wird. Der auf das Saatgut einwirkende reduzierte Druck hat Auswirkungen auf den Feuchtegehalt des Saatguts. Das Saatgut darf nicht über 60 °C erwärmt werden, um thermische Schädigungen zu vermeiden, was bei dem bekannten Verfahren nicht einfach sicherzustellen ist.

Es ist bekannt, dass durch die Behandlung mit einem physikalischen Plasma bei Atmosphärendruck Oberflächen für eine nachfolgende Beschichtung vorbereitet werden können, wodurch sich das Beschichtungsmaterial leichter auf den Oberflächen verteilen lässt und eine bessere Haftung an der Oberfläche aufweist, siehe z. B. die WO 2004/023 927 A1 bezüglich der Beschichtung von Fingernägeln. Die in diesem Zusammenhang bekannten Verfahren und Vorrichtungen sind für die Behandlung von Schüttgut nicht ohne weiteres geeignet.

Das INP - Institut für Niedertemperatur-Plasmaphysik e.V., Greifswald, berühmt sich einer unveröffentlichten Patentanmeldung mit dem Titel: "Anordnung zur Oberflächenbehandlung von Schüttgut in einer Plasmazone bei Atmosphärendruck". Diesem Titel ist über die tatsächliche Anordnung nichts zu entnehmen.

Aus der DE 44 34 767 C1 ist die Elektronenbehandlung von Schüttgut, vorzugsweise Saatgut, bekannt. Dabei wird das Saatgut im freien Fall als breites transparentes Band durch eine Prozesskammer hindurchgeführt, an der mindestens ein Bandstrahler angeordnet ist, der durch ein Strahlaustrittsfenster das Schüttgut mit Elektronen beaufschlagt. Dabei soll es zur Verbesserung der Isotropie der Elektroneneinwirkung auf das Schüttgut im Falle ungenügender Richtungsstreuung des Elektronenvorhangs durch das Strahlaustrittsfenster und die Gasstrecke "bzw. das erzeugte Plasma" zweckmäßig sein, Streukörper anzuordnen die den aus dem Bandstrahlern emitierten Elektronenvorhang teilweise oder vollständig erfassen und in mindestens zwei Teilvorhänge mit zur Fallrichtung des Schüttguts unterschiedlicher Neigung aufspalten. Ansonsten wird ein Plasma der DE 44 34 767 C1 nicht erwähnt, und ein physikalisches Plasma, wie es durch eine Gasentladung erzeugt wird, entsteht bei der bekannten Elektronenbehandlung von Schüttgut auch nicht. Ein solches physikalisches Plasma zeichnet sich neben sehr niederenergetische Elektronen durch reaktive Gasspezies in Form von atomarem Sauerstoff, Radikalen, Ionen und dergleichen sowie UV-Strahlung, d. h. Photonen, aus.

Aus der DE 198 26 160 A1 sind ein Verfahren und eine Vorrichtung zur Reinigung metallischer Körper in einem Plasma bekannt. Dazu werden die metallischen Körper in eine Vakuumkammer eingebracht, in der eine in Inertgasatmosphäre mit einem in Inertgasdruck von weniger als 10 Pa erzeugt wird. In der Vakuumkammer wird dann ein die zu reinigenden Körper ganz oder weitgehend umschließendes Plasma gezündet. Dazu wird ein gegenüber dem Plasmapotential negatives elektrisches Potential an die zu reinigenden Körper angelegt. Die durch das Potential zum zu reinigenden Körper hin beschleunigten Erdgasionen entfernen die Verunreinigungen durch Abtragen der Oberfläche des Körpers. Durch die Notwendigkeit des Evakuierens der Vakuumkammer ist diese Reinigung nur schlagweise und damit langsam durchführbar. Sie funktioniert auch nur bei metallisch leitenden zu reinigenden Körpern. Die Anwesenheit chemisch reaktiver Spezies in einem physikalischen Plasma wird hierbei nicht ausgenutzt. Sie wäre bei einem Druck von weniger als 10 Pa auch von zu geringer Konzentration. Vielmehr die Beschleunigung von lonen aus dem Plasma zum sog. Absputtern der Oberfläche der zu reinigenden Körper genutzt.

Aus der DE 30 51 265 ist ein Verfahren zum Reinigen und Beschichten von Werkstücken bekannt, bei dem um das Werkstück herum ein niedriger statischer Druck unterhalb Atmosphärendruck erzeugt wird. Bei diesem Druck wird ein mit einer Plasmakanone erzeugter Plasmastrom auf das Werkstück gerichtet, wobei zwischen der Plasmakanone und dem Werkstück ein elektrischer Potentialgradient erzeugt wird. Zum Reinigen des Werkstücks wird das Werkstück in Bezug auf die Plasmakanone negativ gepolt. Das bekannte Verfahren ist weder zur Behandlung von Schüttgut noch bei Atmosphärendruck vorgesehen. Es setzt überdies metallisch leitende Werkstücke voraus, und die Anwesenheit chemisch reaktiver Spezies in einem physikalischen Plasma wird auch hier nicht ausgenutzt..

Aus der DE 697 26 444 T2 sind ein Verfahren und eine Vorrichtung zum Verbessern der Wachstumsmerkmale von Saatgut durch Elektronenlawinen bekannt. Dabei wird das Saatgut zwischen einem Paar von Elektroden angeordnet, zwischen denen eine Gleichspannung mit einer überlagerten Wechselspannung angelegt wird, um gepulste Elektronenlawinen zu erzeugen, die sich von der Kathode in Richtung auf und in die Samen hinein bewegen.

Aus der WO 97/33939 sind eine Vorrichtung mit den Merkmalen des Oberbegriffs des unabhängigen Patentanspruchs 5 und ein entsprechendes Verfahren zur Behandlung von Schüttgut mit einem physikalischen Plasma bei Atmosphärendruck bekannt. Dabei wird das Schüttgut auf einem als Förderer und Gegenelektrode dienendes Förderband durch den Behandlungsraum hindurch gefördert. Alternativ sind der Förderer und die Gegenelektrode eine Förderschnecke, die das Schüttgut durch einen rohrförmigen Behandlungsraum hindurchfördert.

Eine Vorrichtung mit den Merkmalen des Oberbegriffs des unabhängigen Patentanspruchs 5 und ein entsprechendes Verfahren zur Behandlung von Schüttgut mit einem physikalischen Plasma sind auch aus der US 4,737,885 bekannt. Hier können der Förderer und die Gegenelektrode ebenfalls ein Förderband sein, das das Schüttgut durch den Behandlungsraum fördert. Dabei wird das Schüttgut mit metallischem Granulat versetzt, das hinterher wieder von dem Schüttgut abgetrennt werden muss. Alternativ zu einem Förderband kann eine Förderschnecke oder eine Förderkette vorgesehen sein, die ebenfalls zugleich als Gegenelektrode dient.

### AUFGABE DER ERFINDUNG

Der Erfindung liegt die Aufgabe zugrunde, ein Verfahren zur Behandlung von Schüttgut mit einem physikalischen Plasma bei Atmosphärendruck und eine hierfür geeignete Vorrichtung aufzuzeigen, die auch bei größeren Mengen an Schüttgut eine allseitige Behandlung der Teilchen des Schüttguts mit dem physikalischen Plasma sicherstellen.

### LÖSUNG

Die Aufgabe der Erfindung wird durch ein Verfahren mit den Merkmalen des Patentanspruchs 1 und durch eine Vorrichtung mit den Merkmalen des Patentanspruchs 5 gelöst. Bevorzugte Ausführungsformen des neuen Verfahrens sind in den abhängigen Patentansprüchen 2 bis 4, bevorzugte Ausführungsformen der neuen Vorrichtung in den abhängigen Patentansprüchen 6 bis 9 beschrieben.

### BESCHREIBUNG DER ERFINDUNG

Bei dem neuen Verfahren erfolgt die Behandlung mit dem physikalischen Plasma bei Atmosphärendruck. Durch die Behandlung bei Atmosphärendruck entfällt die Notwendigkeit, das Schüttgut in einen Bereich einzuschleusen und aus diesem wieder auszuschleusen, in dem ein reduzierter Druck herrscht. Wenn bei dem neuen Verfahren ein leichter Unterdruck gegenüber dem statischen Umgebungsdruck im Bereich des physikalischen Plasmas vorliegt, so beruht dieser ausschließlich auf dynamischen Effekten, wie beispielsweise auf einer Absaugung aus dem Bereich des physikalischen Plasmas. Auch ein etwaiger Überdruck gegenüber dem Umgebungsdruck ist auf derartige dynamische Effekte, wie beispielsweise eine Einblasung von Reaktionsgas in den Bereich des physikalischen Plasmas beschränkt.

In dem erfindungsgemäß durch dielektrisch behinderte Entladung bei Atmosphärendruck erzeugten Plasma werden neben sehr niederenergetischen Elektronen mit einer Energie der Größenordnung 1 eV reaktive Spezies in Form von atomarem Sauerstoff, Radikalen, lonen usw. sowie UV-Strahlung, d. h. Photonen, erzeugt, die wesentlich für die Plasmabehandlung des Schüttguts in physikalischer, chemischer und ggf. auch biologischer Hinsicht sind. Aufgrund einer synergetischen Wirkungsweise der verschiedenen Substanzen, einschließlich der Photonen, in dem Plasma unterscheidet sich die Plasmabehandlung von rein physikalischen Behandlungen mittels Elektronenstrahlen. Dabei sorgt die Behandlung bei Atmosphärendruck aufgrund der sehr viel höheren Teilchendichte als bei reduziertem Druck für eine stark verkürzte Behandlungsdauer.

Bei dem neuen Verfahren entfällt auch ein unerwünschter Einfluss auf den Feuchtegehalt des Schüttguts durch einen einwirkenden Unterdruck. Weiterhin ist beachtlich, dass die Einhaltung einer Maximaltemperatur des Schüttguts, damit dieses keine thermischen Schäden erleidet, bei Atmosphärendruck viel einfacher ist, weil bei Atmosphärendruck im Gegensatz zu einer Umgebung auf Unterdruck viel bessere Möglichkeiten der Abführung überschüssiger Wärmeenergie durch Konvektion gegeben sind. Auch die Förderung des Schüttguts und seine Umwälzung, um eine allseitige Behandlung zu erreichen, erweist sich in einer Umgebung auf Atmosphärendruck viel einfacher als in einer immer räumlich begrenzten Vakuumkammer.

Die thermischen Auswirkungen der Behandlung des Schüttguts mit dem physikalischen Plasma halten sich auch deshalb in engen Grenzen, weil das Plasma durch dielektrisch behinderte Gasentladungen erzeugt wird, so dass es sich um ein vergleichsweise kaltes Plasma handelt. Die Verwendung von dielektrischen Gasentladungen zur Erzeugung des Plasmas ist auch noch mit weiteren Vorteilen verbunden. Die dielektrische Behinderung sorgt selbst bei relativ großen Flächen der mit einer Wechselhochspannung beaufschlagten Elektroden für eine uniforme Ausbildung des Plasmas. D. h., die Konzentration der Gasentladungen auf wenige Entladungskanäle wird vermieden. Dies gilt sogar selbst dann, wenn bei dem neuen Verfahren das Schüttgut direkt in den Bereich zwischen die Elektroden eingebracht wird, um es dort mit dem Plasma zu behandeln. Die hierdurch hervorgerufenen Veränderungen der elektrischen Verhältnisse zwischen den beiden Elektroden sind aufgrund der dielektrischen Behinderung der Gasentladungen und der Tatsache, dass sie durch eine bipolare Wechselhochspannung, d. h. Spannungen wechselnder Polarität, hervorgerufen werden, grundsätzlich wenig kritisch. Zudem verhindert die Bewegung der Teilchen des Schüttguts durch den Bereich der Gasentladungen hindurch, dass die Teilchen lokal durch immer an derselben Stelle ansetzende Gasentladungen stärker beansprucht werden. Dies gilt insbesondere dann, wenn die einzelnen Teilchen des Schüttguts bei ihrem Transport durch den Bereich der Gasentladungen fortlaufend räumlich umorientiert werden, d. h. zu dem kürzesten Abstand zwischen den Elektroden eine sich immer ändernde räumliche Ausrichtung aufweisen. Auch die Tatsache, dass die Teilchen des Schüttguts in vereinzelter Form durch den Bereich der Gasentladung hindurch geführt werden, d. h. ohne Kontakt und möglichst mit Abstand zu benachbarten Teilchen, führt dazu, dass die elektrischen Verhältnisse zwischen den Elektroden durch das Schüttgut nicht übermäßig verändert werden. Zudem wird auf diese Weise sichergestellt, dass das durch die Gasentladung erzeugte Plasma allseitig auf die Teilchen des Schüttguts einwirken kann. Zusammengefasst sind es wesentliche Vorteile des neuen Verfahrens, dass das Plasma durch die dielektrisch behinderten Gasentladungen gleichmäßig in einem vergleichsweise großen Volumen erzeugt werden kann, und diese Erzeugung des Plasmas nicht wesentlich dadurch gestört wird, dass das Schüttgut unmittelbar durch dieses Plasmavolumen hindurch bewegt wird. Dieser Vorteil macht sich unmittelbar bei den Investitionskosten für die Umsetzung des neuen Verfahrens, insbesondere die Herstellungs- und Betriebskosten der neuen Vorrichtung bemerkbar.

Wie bereits angedeutet wurde, ermöglicht es die Behandlung des Schüttguts bei Atmosphärendruck ohne weiteres, das Schüttgut mit einem Gasstrom zu beaufschlagen. Dieser Gasstrom kann zur Kühlung bzw. Temperierung des Schüttguts verwendet werden, oder auch dazu, ein Reaktionsgas in das physikalische Plasma einzuführen. Auch wenn die Gasentladungen zur Erzeugung des Plasmas in Umgebungsluft gezündet werden, ist eine Durchströmung des Behandlungsbereichs sinnvoll, wenn nicht gar notwendig, weil hierdurch sich durch die Gasentladungen und die Reaktionen des Plasmas verbrauchende Substanzen ersetzt und so gleich bleibende Bedingungen für die Erzeugung des Plasmas sichergestellt werden. Dies ist Voraussetzung für die Erzeugung eines möglichst homogenen Plasmas innerhalb eines größeren Volumens. Eine weitere Funktion des Gasstroms kann die Förderung des Schüttguts durch den Bereich des physikalischen Plasmas oder auch die Umwälzung des Schüttguts innerhalb des physikalischen Plasmas sein. Je nach der Aufgabe des Gasstroms im Einzelfall sind die Richtung des Gasstroms, seine Stärke und der genaue Ort der Beaufschlagung des Schüttguts mit dem Gasstrom zu wählen. Dieser Ort kann unmittelbar im Bereich oder auch im angrenzenden Umfeld der Behandlung des Schüttguts mit dem physikalischen Plasma liegen.

Um die bei dem neuen Verfahren angesichts der grundsätzlich verbesserten Kühlung durch Konvektion bereits verringerte Gefahr einer thermischen Schädigung des Schüttguts gänzlich auszuschließen, kann eine Temperatur des Schüttguts oder eine andere Temperatur im Bereich der Behandlung mit dem physikalischen Plasma, die Rückschlüsse auf die Temperatur des Schüttguts zulässt, erfasst werden, um in Abhängigkeit hiervon die Parameter des neuen Verfahrens zu steuern oder zu regeln. Eine Begrenzung der Temperatur des Schüttguts auf eine vorgegebene Maximaltemperatur kann dabei beispielsweise durch Variation der Parameter des physikalischen Plasmas, der Verweildauer des Schüttguts in dem Bereich des physikalischen Plasmas und der Beaufschlagung des Schüttguts mit einem Gasstrom bewirkt werden.

Damit das neue Verfahren seine maximale positive Wirkung auf das Schüttgut entfaltet wird das Schüttgut dem Plasma allseitig ausgesetzt.

Die allseitige Behandlung der Teilchen des Schüttguts mit dem physikalischen Plasma wird auch dadurch gefördert, dass die Teilchen des Schüttguts auf Abstand zu den Elektroden gehalten werden. Sie sollen sich also möglichst irgendwo im Kernbereich des Gasraums zwischen den Elektroden befinden. Dazu wird der Förderer mit einem Rüttler derart beaufschlagt, dass die Teilchen des Schüttguts auf den Förderer hüpfen, wobei sie bis auf sehr kurze Kontaktzeiten mit dem Förderer einen Abstand zu dem Förderer aufweisen. Die hierfür optimale Frequenz der Bewegungen des Förderers mit dem Rüttler hängt von den Teilchen des Schüttgut, d. h. ihrer Größe, ihrer Dichte und ihrer Form, ab.

Die dielektrisch behinderten Gasentladungen können bei Atmosphärendruck besonders günstig durch untereinander um ein Vielfaches ihrer Dauer beabstandete einzelne Spannungspulse wechselnder Polarität, bipolare Spannungspulspaare oder bipolare Spannungspulsgruppen hervorgerufen werden. Bei den einzelnen Spannungspulsen kann so verglichen mit ihrer Pulsfolgefrequenz ein sehr steiler Spannungsanstieg realisiert werden, der das Zünden einer quasihomogenen Gasentladung bei Atmosphärendruck ermöglicht. Zugleich wird die in die Gasentladungen eingespeiste elektrische Leistung durch den Abstand der Spannungspulse begrenzt. Auf diese Weise wird auch eine unnötige elektrische Aufheizung des Plasmas und des sich darin befindlichen Schüttguts verhindert. Insbesondere kommt es nicht zu einer Widerstandsaufheizung der Teilchen des Schüttguts.

Das neue Verfahren kann beispielsweise dazu eingesetzt werden, um Saatgut als Schüttgut mit dem physikalischen Plasma zu behandeln, um dessen Keimfähigkeit zu verbessern, indem unerwünschte chemische oder biologische Oberflächenverunreinigungen des Saatguts entfernt bzw. abgetötet werden und/oder indem die Oberfläche an der Körner des Saatguts bestimmten physikalischen oder chemischen Reaktionen unterworfen wird und/oder mit einer sich aus dem Plasma abscheidenden Beschichtung versehen wird. Konkret kann das neue Verfahren beispielsweise dazu eingesetzt werden, Saatgut zu pillieren, d. h. mit einer Hülle aus Pflanzenschutzmitteln zu versehen, oder es auch mit anderen Funktionsschichten zu umhüllen.

Immer wenn das neue Verfahren dazu genutzt wird, Substanzen auf den Teilchen des Schüttguts abzuscheiden, können die beschichteten Teilchen entweder ganz aus einem Teilchen des Schüttguts und einer hierauf aus dem physikalischen Plasma abgeschiedenen Schicht bestehen, oder das physikalische Plasma kann auch nur zum Aufbringen einer Teilschicht oder zur Haftungsverbesserung der eigentlichen Beschichtung eingesetzt werden, die anschließend in anderer Weise aufgebracht wird. Besondere Vorteile weist das neue Verfahren auf, wenn zumindest ein wesentlicher Anteil der Beschichtung des Saatguts aus dem Plasma heraus erfolgt, weil der hierbei herrschende Atmosphärendruck viel höhere Abscheidungsraten ermöglicht als beispielsweise eine Plasmabehandlung bei reduziertem Druck. Eine vornehmliche Aktivierung der Oberfläche der Teilchen des Schüttguts führt beispielsweise zu einer Vereinfachung einer sich anschließenden Beschichtung und/oder Beleimung und insbesondere zu einer Verbesserung der dabei gewünschten Benetzung der und Haftung an den Teilchen des Schüttguts.

Mit dem neuen Verfahren können ganz verschiedene Schüttgüter behandelt werden. Von besonderem Interesse sind alle Schüttgüter, deren Teilchen anschließend ganz oder teilweise beschichtet werden sollen, um sie beispielsweise miteinander zu verkleben. So können Teilchen, denen anschließend ein Bindemittel zugesetzt wird, um sie zu Platten oder anderen Formkörpern miteinander zu verkleben, durch das neue Verfahren behandelt werden, um die Festigkeit der Verklebung zu steigern oder die erforderliche Bindemittelmenge zu reduzieren. Konkrete Einsatzgebiete können dabei die Behandlung von Holzspänen für die Herstellung von Holzspanplatten, die Behandlung von Holzteilchen und Kunststoffteilchen zur Herstellung von Holz-Kunststoff-Verbunden (Wood-Plastic-Composites = WPC) und auch die Vorbehandlung von beispielsweise Glas- oder Kohlefasern für die Verstärkung von Kunststoffen sein. Im letzteren Fall wird der Verbund zwischen den Verstärkungsfasern und dem Kunststoff durch die Behandlung der Verstärkungsfasern mit dem physikalischen Plasma durch das hier beschriebene Verfahren verbessert. Dies ist auf eine Oberflächenaktivierung der Fasern durch das Plasma zurückzuführen.

Das neue Verfahren ist vorteilhaft auch mit einer Sortierung der Teilchen des Schüttguts nach ihrer Größe und ihrem Gewicht kombinierbar, insbesondere mit solchen bekannten Sortierverfahren, bei denen die Teilchen eines Schüttguts auf einem Rüttler angeordnet werden.

Bei der neuen Vorrichtung für die Behandlung von Schüttgut grenzen die Elektroden der Plasmaquelle an den Behandlungsraum an, wobei zumindest eine der Elektroden mit einer dielektrischen Abschirmung versehen ist und wobei die Elektroden von einem Hochspannungsgenerator mit einer bipolaren Wechselhochspannung beaufschlagt werden. Um die Teilchen des Schüttguts in den Einwirkungsbereich des auf diese Weise erzeugten Plasmas zu bringen, ist eine durch den Behandlungsraum verlaufende Förderstrecke vorgesehen, die die Teilchen des Schüttguts in vereinzelter Form durch den Behandlungsraum hindurchfördert.

Eine Druckgasquelle und/oder ein Ventilator kann vorhanden sein, um das Schüttgut im Bereich und/oder im Umfeld der Behandlung mit dem physikalischen Plasma mit einem Gasstrom zu beaufschlagen.

Ein Temperatursensor kann vorgesehen sein, um im Bereich der Behandlung mit dem physikalischen Plasma eine Temperatur zu erfassen, die zumindest einen mittelbaren Hinweis auf die Maximaltemperatur des Schüttguts aufgrund der Plasmabehandlung gibt. So kann eine Temperatursteuerung die Temperatur des Schüttguts auf eine vorgegebene Maximaltemperatur beschränken, indem sie Betriebsparameter der neuen Vorrichtung variiert.

Wenn ein Rüttler zum Einsatz kommt, der den Förderer, beispielsweise ein Förderband, zu insbesondere periodischen Bewegungen quer zur Förderrichtung zwingt, ist zu prüfen, inwieweit sich hierdurch der Abstand der Elektroden der Plasmaquelle ändert. Dies gilt insbesondere, da der Förderer eine der beiden Elektroden der Plasmaquelle ausbildet. Wenn die Querbewegung des Förderers über das hinausgeht, was an Abstandsänderung zwischen den Elektroden der Plasmaquelle tolerierbar ist, können beide Elektroden als starre Einheit von dem Rüttler bewegt werden, so dass ihr Abstand konstant bleibt. Wenn die Größe der Querbewegung jedoch für den Abstand der Elektroden unkritisch ist, ist es aus energetischen Gründen bevorzugt, nur den Förderer zu bewegen. Bei geeigneter Form der Querbewegung des Förderers unter Einwirkung des Rüttlers, kann diese Querbewegung auch genutzt werden, um die Teilchen des Schüttguts durch den Behandlungsraum hindurchzufördem. Entsprechend ausgebildete Förderstrecken sind im Stand der Technik grundsätzlich bekannt.

In einer Ausführungsform der neuen Vorrichtung ist eine Elektrode der Plasmaquelle gegenüber einem als Gegenelektrode dienenden Förderband angeordnet. In einer Variation dieser Ausführungsform sind zwei Elektroden der Plasmaquelle gegenüber einem als Zwischenelektrode dienenden Förderband angeordnet, wobei ein Hochspannungsgenerator eine Wechselhochspannung zwischen den beiden Elektroden erzeugt. Auch in diesem Fall kann das Förderband aus Sicherheitsgründen geerdet sein. Es entfällt aber die Notwendigkeit, den Hochspannungsgenerator zu erden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert anhand eines Vertikalschnitts durch eine Vorrichtung zur Behandlung von Schüttgut mit einem physikalischen Plasma bei Atmosphärendruck ein Verfahren, bei dem das Schüttgut von oben nach unten durch einen Behandlungsraum hindurch fällt.
- **Fig.2**: skizziert anhand eines Vertikalschnitts durch eine weitere Vorrichtung für die Behandlung von Schüttgut mit einem physikalischen Plasma bei Atmosphären- druck eine Ausführungsform des neuen Verfahrens, bei dem das Schüttgut mit einem als Zwischenelektrode für dielektrisch behinderte Gas- entladungen dienenden Förderband gefördert wird.
- **Fig. 3**: skizziert anhand eines Vertikalschnitts eine Abwandlung der Vorrichtung gemäß Fig. 2 in Bezug auf die Sicherstellung der allseitigen Behandlung des Schüttguts mit dem physikalischen Plasma; und
- **Fig. 4**: skizziert eine Abwandlung der Vorrichtung gemäß Fig. 2 in Bezug auf die Erzeugung der dielektrisch behinderten Gasentladung, bei der hier das Förderband als Gegenelektrode dient.

### FIGURENBESCHREIBUNG

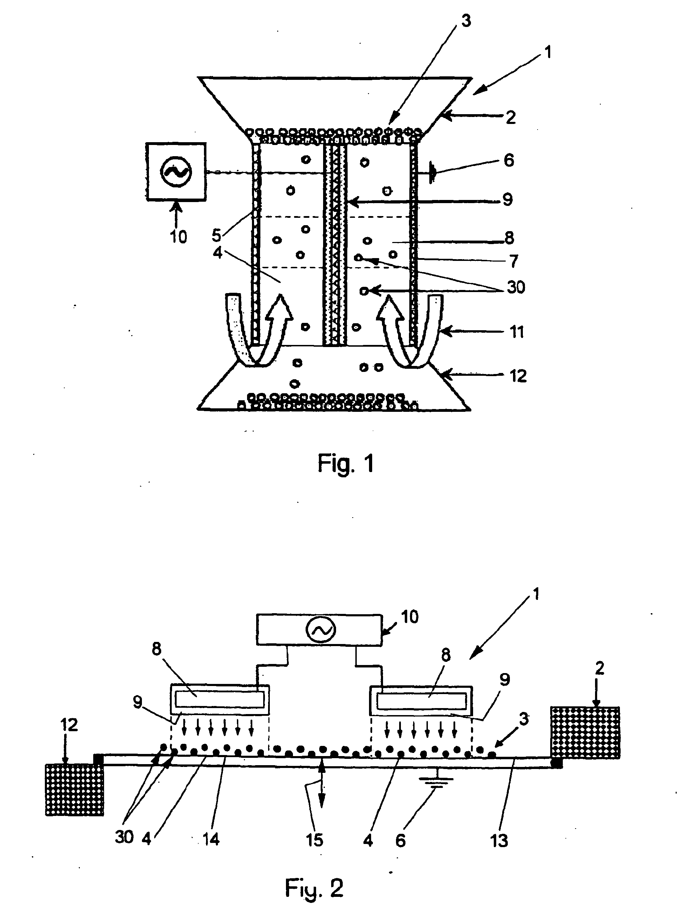

Die in Fig. 1 skizzierte Vorrichtung 1 weist ein Aufladereservoir 2 auf, aus dem heraus ein aus einzelnen Teichen 30 bestehendes Schüttgut 3 von oben in einen Behandlungsraum 4 abgegeben wird. Eine hierbei zum Einsatz kommende Dosierungseinrichtung, die die Teilchen 30 des Schüttguts 3 bei der Abgabe in den Behandlungsraum 4 vereinzelt, ist hier nicht separat wiedergegeben, kann aber beispielsweise ein Zellenrad aufweisen. Der Behandlungsraum 4 wird durch ein äußeres Rohr 5 begrenzt, das als mit der Erde 6 verbundene Gegenelektrode 7 für eine auf der Rohrachse angeordnete Elektrode 8 dient, die mit einer dielektrischen Abschirmung 9 versehen ist. Die Elektrode 8 wird von einem Hochspannungsgenerator 10 mit bipolaren Spannungspulspaaren einer Amplitude von einigen 10.000 Volt beaufschlagt, die eine Pulsdauer von unter 10 µs bei einer Wederholungsfrequenz der bipolaren Spannungspulspaare von weniger als 100.000 Hz aufweisen. Hierdurch werden bei Atmosphärendruck in dem Behandlungsraum 4 Gasentladungen zwischen der Elektrode 8 und der Gegenelektrode 7 hervorgerufen, die durch die dielektrische Abschirmung 9 der Elektrode 8 dielektrisch behindert sind. Die dielektrische Behinderung begrenzt den Strom durch die Gasentladungen und sorgt für eine gleichmäßige Verteilung der Gasentladungen, ohne ausgeprägte lokale Entladungskanäle. So wird die Erzeugung eines physikalischen Plasmas durch die Gasentladungen in dem Behandlungsraum 4 stabilisiert. Dieses physikalische Plasma wirkt auf das Schüttgut 3 ein, wodurch die Teilchen 30 des Schüttguts an ihrer Oberfläche modifiziert werden. Dies gilt bereits dann, wenn das Plasma in dem Behandlungsraum 4 aus Luft erzeugt wird. So können die dabei entstehenden Sauerstoffradikale Mikroorganismen auf der Oberfläche der Teilchen 30 des Schüttguts abtöten, was eine biologische Desinfizierung des Schüttguts bedeutet. Die Sauerstoffradikale können auch zu einer Aktivierung der Oberfläche der Teilchen 30 genutzt werden, die ihre spätere Beschichtung oder Verklebung begünstigt. In dem Behandlungsraum 4 können aber auch Reaktionsgase eingeführt werden, um bestimmte chemische Reaktionen durch das Plasma auszulösen und/oder um bestimmte Substanzen auf der Oberfläche der Teilchen 30 abzuscheiden. Angedeutet ist in Fig. 1 ein aufwärts durch den Behandlungsraum 4 führender Gasstrom 11. Dieser Gasstrom 11 stellt das Gas bereit, in dem das Plasma in dem Behandlungsraum 4 durch die Gasentladungen zwischen der Elektrode 8 und der Gegenelektrode 7 gezündet wird. Der Gasstrom 11 hat aber auch noch andere Funktionen. Er bestimmt die Verweildauer des Schüttguts 3 in dem Behandlungsraum 4, indem er dessen Fallgeschwindigkeit abbremst. Zudem ruft er Turbulenzen hervor, die zu einer Umwälzung des Schüttguts in dem Behandlungsraum 4 führen, so dass dessen Teilchen 30 umgewälzt und durchmischt und von allen Seiten her gleichmäßig mit dem Plasma in dem Behandlungsraum 4 behandelt werden, bis sie nach ihrer Behandlung in ein Abladereservoir 12 am unteren Ende der Vorrichtung 1 eintreten.

Die in **Fig. 2** skizzierte Vorrichtung 1 weist statt einer im wesentlichen Schwerkraft-betriebenen Förderstrecke durch den Behandlungsraum 4 wie in Figur 1 ein angetriebenes Förderband 13 auf, das das die Teilchen 30 des Schüttguts 3 hier vereinzelt und von dem Aufladereservoir 2 in horizontaler Richtung durch den Behandlungsraum 4 in das Abladereservoir 12 überführt. Dabei ist das Förderband 13 mit der Erde 6 verbunden und dient als Zwischenelektrode 14 zwischen zwei jeweils mit einer dielektrischen Abschirmung 9 versehenen Elektroden 8, zwischen denen der Wechselhochspannungsgenerator 10 hier die Wechselhochspannung für das Erzeugen eines Plasmas in dem Behandlungsraum 4 generiert. Die Zwischenelektrode 14 begrenzt einseitig die beiden Teile des Behandlungsraums 4, die sich jeweils zwischen einer der Elektroden 8 und dem Förderband 13 erstrecken, und verbindet sie elektrisch miteinander. Um die Teilchen des Schüttguts 3 allseitig und gleichmäßig mit dem Plasma zu behandeln, das durch dielektrisch behinderte Gasentladungen zwischen den Elektroden 8 und der Zwischenelektrode 14 gezündet wird, ist ein in Fig. 2 nur schematisch angedeuteter Rüttler 15 vorgesehen, der die Höhenlage des Förderbands 13 stoßweise verändert, so dass die einzelnen Teilchen 30 des Schüttguts 3 auf dem Förderband 13 "hüpfen". Hierdurch werden sie sowohl vereinzelt als auch gedreht, so dass das Plasma allseitig auf sie einwirken kann. Außerdem werden die Teilchen für ihre wesentliche Verweildauer in dem Behandlungsraum auf Abstand zu dem Förderband gehalten, was ebenfalls ihre allseitige Behandlung mit dem Plasma fördert. Wenn die Frequenz des Rüttlers auf die Teilchen des Schüttguts abgestimmt wird, können die Teilchen von dem Rüttler 15 quasi in Schwebe über dem Förderband 13 gehalten werden. Zusätzlich kann bei der Vorrichtung 1 gemäß Fig. 2, was hier aber nicht dargestellt ist, ein Gasstrom über das Schüttgut 3 geführt werden, um Reaktionsgase in den Behandlungsraum 4 einzuführen und/oder um eine thermische Schädigung des Schüttguts 3 in dem Behandlungsraum 4 sicher auszuschließen, indem das Schüttgut 3 gezielt gekühlt wird. Hierbei können sich in dem Behandlungsraum 4 durch den Gasstrom leichte dynamische Abweichungen des Drucks gegenüber dem Umgebungsdruck einstellen. Es sind aber keine Druckschleusen für das Schüttgut 3 erforderlich, durch die dieses in die Vorrichtung 1 eingebracht oder aus dieser entnommen werden müsste, um deren Funktion aufrecht zu erhalten.

Der in Fig. 2 nur durch einen Doppelpfeil angedeutete Rüttler 5 kann ganz unterschiedlich ausgebildet sein. Er kann die gesamte Anordnung aus den Elektroden 8 und dem Förderband 13 oder nur das Förderband 13 oder nur einen Teil davon stochastisch oder periodisch in vertikaler Richtung verlagern oder um eine horizontale Schwenkachse verschwenken. Vorzugsweise erfolgt das Verlagern bzw. Verschwenken stoßartig. Es ist auch möglich, den Rüttler in Form eines das Schüttgut 3 von unten durch das Förderband 13 beaufschlagenden Gebläses auszubilden, das mit dem von ihm hervorgerufenen Gasstrom zu einer Umlagerung der einzelnen Teilchen 30 des Schüttguts 3 auf dem Förderband 13 führt.

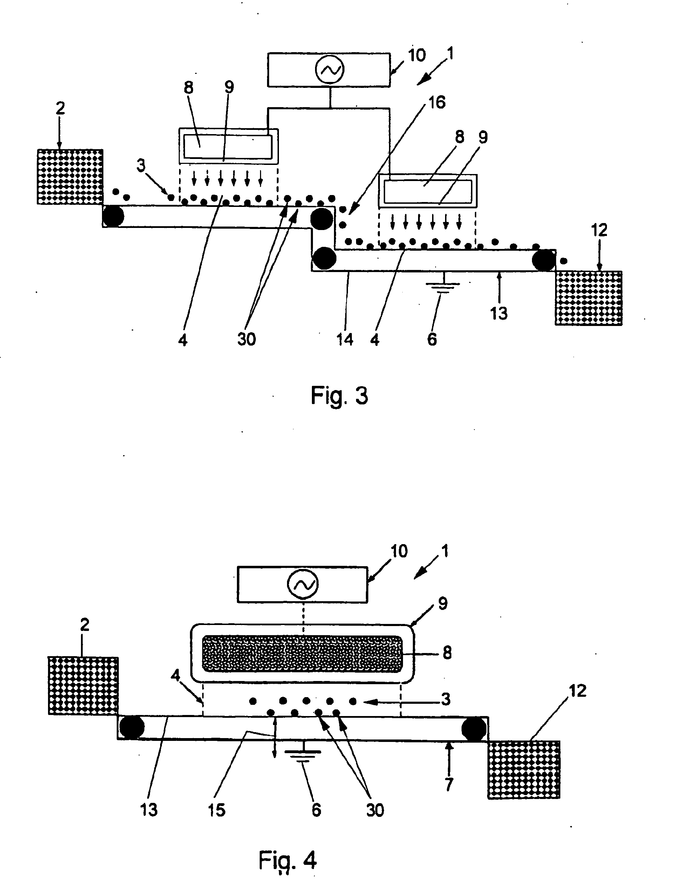

**Fig. 3** skizziert eine andere Möglichkeit, die Teilchen 30 des Schüttguts 3 beim Transport durch den Behandlungsraum 4 umzuverteilen, um eine allseitige Behandlung des Schüttguts 3 mit dem physikalischen Plasma sicherzustellen. Hier weist das Förderband 13 eine Stufe 16 zwischen den beiden Teilbereichen des Behandlungsraumes 4 auf. Indem es die Stufe 16 hinunterfällt, wird das Schüttgut 3 wird vor dem Eintreten in den zweiten Teil des Behandlungsraums 4 gewendet. Auch bei der Vorrichtung 1 gemäß Fig. 2 kann das Förderband 13 zusätzlich insgesamt oder bereichsweise mit einem Rüttler 15 (hier nicht dargestellt) versehen sein.

Bei der Vorrichtung 1 gemäß **Fig. 4** ist in Abweichung von Fig. 2 nicht ein Paar von Elektroden 8 mit dielektrischen Abschirmungen 9 vorgesehen, zwischen denen das Förderband 13 als Zwischenelektrode wirkt. Vielmehr dient das mit der Erde 6 verbundene Förderband 13 hier als Gegenelektrode 7 zu einer einzigen Elektrode 8 mit dielektrischer Abschirmung 9, die von einem Hochspannungsgenerator 10 mit einer gegenüber der Erde 6 erzeugten Spannung beaufschlagt wird. Hierdurch weist der Behandlungsraum 4 nur einen einzigen Bereich auf. Grundsätzlich ist die Funktionsweise der Vorrichtung 1 gemäß Fig. 4 aber genauso wie diejenige gemäß Fig. 2. Dies gilt insbesondere in Bezug auf die Vereinzelung der Teilchen 30 und deren Umorientierung während ihres Durchtritts durch den Behandlungsraum 4.

Das Förderband 13 kann auch so steil geneigt werden, dass die Teilchen 30 des Schüttguts 3 das Förderband 13 hinabrollen, d. h. zu dem Abladereservoir 12 gelangen, ohne dass das Förderband 13 bewegt wird. Die dafür notwendige Neigung des Förderbands 13 hängt natürlich stark von der Form der Teilchen 30 ab. Wenn diese gänzlich unrund, also z. B. faserförmig sind, kann ein nutzbares das Förderband 13 Herabrollen des Schüttguts 3 sogar ausgeschlossen sein. Wenn die Teilchen hinreichend rund sind, kann das Förderband 13 kann hingegen sogar in Gegenrichtung zu den in das Abladereservoir 12 hinabrollenden Teilchen des Schüttguts 3 angetrieben werden, um die Rollbewegung der Teilchen bzw. ihre Verweildauer in dem Behandlungsraum 4, in dem das physikalische Plasma auf sie einwirkt, einzustellen. Auch hierbei kann wieder ein Rüttler 15 für das Förderband 13 vorgesehen sein, um die für ihre allseitige Behandlung wichtige Umverteilung der Teilchen des Schüttguts 3 zu fördern.

Überdies kann das Förderband 13, das in den Figuren als um Rollen 17 umlaufend dargestellt ist, selbst bei horizontaler oder leicht ansteigender Ausrichtung in dem Behandlungsraum 4 ausschließlich eine von dem Rüttler hervorgerufene periodische Bewegung vollführen. Wenn diese periodische Bewegung eine ausreichende seitliche Komponente hat, kann sie neben ihrer Vereinzelungs- und Umorientierungsfunktion auch für das Fördern der Teilchen 30 des Schüttguts 3 durch den Behandlungsraum 4 ausreichend sein.

### BEZUGSZEICHENLISTE

- 1: Vorrichtung
- 2: Aufladereservoir
- 3: Schüttgut
- 4: Behandlungsraum
- 5: Rohr
- 6: Erde
- 7: Gegenelektrode
- 8: Elektrode
- 9: dielektrische Abschirmung
- 10: Hochspannungsgenerator
- 11: Gasströmung
- 12: Abladereservoir
- 13: Förderband
- 14: Zwischenelektrode
- 15: Rüttler

- 16: Stufe
- 17: Rolle
- 30: Korn

## Patentansprüche

1. Verfahren zur Behandlung von Schüttgut (3), das aus einer Vielzahl einzeiner Teilchen (30) besteht, mit einem physikalischen Plasma bei Atomsphärendruck, wobei das physikalische Plasma In einem Behandlungebereich (4) mittels dielektrisch behinderter Gasentladungen zwischen zwei Elektroden (7, 8, 14) erzeugt wird, zwischen denen eine bipolare Wechselhochspannung angelegt wird, wobei die Teilchen (30) das Schüttguts (3) mit einem Förderer, der zugleich als Elektrode (7, 14) dient, durch den Behandlungabereich (4) zwischen den Elektroden (7, 8, 14) hindurch bewegt werden und wobei der Förderer derart mit einem Rüttler (15) derart beaufschlagt wird, dass die Teilchen (30) des Schüttguts (3) in vereinzelter Form auf dem Förderer hüpfen.

2. Verfahren nach Anspruch 1, **dadurch gekennzeichnet, dass** das Schüttgut (3) In dem Behandlungsbereich (4) und/oder Im Umfeld der Behandlung mit dem physikalischen Plasma mit einem Gasstrom (11) beaufschlagt wird.

3. Verfahren nach Anspruch 1 oder 2, **dadurch gekennzeichnet dass** eine Temperatur in dem Behandlungsbereich (4) erfasst und auf eine vorgegebene Maximaltemperatur begrenzt wird.

4. Verfahren nach einem der Ansprüche 1 bis 3, **dadurch gekennzeichnet, dass** die dielektrisch behinderten Gasentladungen durch unterelnander um ein Vielfaches ihrer Dauer beabstandete einzeine Spannungspulse wechseinder Polarität, bipolare Spannungspulspaare oder bipolare Spannungspulsgruppen hervorgerufen werden.

5. Vorrichtung für die Behandlung von Schüttgut (3), das aus einer Vielzahl einzeiner Teilchen (30) besteht, mit einem physikalischen Plasma bei Atomsphärendruck, mit einem Behandlungsraum (4), durch den die Teilchen (30) des Schüttgut (3) hindurch treten, und mit einer Plasmaquelle, die Elektroden (7, 8, 14) aufweist, zwischen weichen ein Hochspannungsgenerator (10) eine Hochspannung hervorruft, und die das physikalische Plasma in dem Behandlungsraum bereitstellt, wobei die Elektroden (7, 8, 14) der Plasmaquelle en den Behandlungsraum (4) angrenzen, wobei zumindest eine der Elektroden (8) mit einer dielektrischen Abschirmung versehen ist, wobei zumindest eine der Elektroden (8) von dem Hochspannungsgenerator mit einer bipolaren Wechselhochspannung beaufschlagbar ist und wobei ein durch den Behandlungsraum (4) verlaufender Förderer, der zugleich als Elektrode (7, 14) dient, die Teilchen (30) des Schüttguts (3) durch den Behandlungsraum (4) hindurch fördert, **dadurch gekennzeichnet dass** eine Umwälzeinrichtung für des Schüttgut (3) in dem Behandlungsraum (4) vorgesehen ist, die einen an dem Förderer für das Schüttgut (3) angreifenden Rüttler (15) aufweist, so dass der Förderer die Teilchen (30) des Schüttguts (3) in vereinzelter Form auf dem Förderer hüpfen durch den Behandlungsraum (4) hindurch fördert.

6. Vorrichtung nach Anspruch 5, **dadurch gekennzeichnet, dass** eine Druckgasquelle und/oder ein Ventilator vorhanden sind, um das Schüttgut (3) im Bereich und/oder im Umfeld der Behandlung mit dem physikalischen Plasma mit einem Gasstrom (11) zu beaufschlagen,

7. Vorrichtung nach Anspruch 5 oder 8, **dadurch gekennzeichnet, dass** ein Temperatursensor eine Temperatur im Bereich der Behandlung mit dem physikalischen Plasma erfasst und dass eine Temperatursteuerung eine Temperatur des Schüttguts (3) auf eine vorgegebene Maximaltemperatur beschränkt.

8. Vorrichtung nach einem der Ansprüche 5 bis 7, **dadurch gekennzeichnet, dass** eine Elektrode (8) der Plasmaquelle gegenüber einem als Gegenelektrode dienenden Förderband (13) angeordnet ist

9. Vorrichtung nach einem der Ansprüche 5 bis 7, **dadurch gekennzeichnet dass** zwei Elektroden (8) der Plasmaquelle gegenüber einem als Zwischenelektrode (14) dienenden Förderband (13) angeordnet sind, wobei ein Hochspannungsgenerator (10) eine Wechselhochspannung zwischen den beiden Elektroden (8) erzeugt.

## Claims

1. Method of treating bulk material (3) consisting of a multitude of individual particles (30) with a physical plasma at atmospheric pressure, wherein the physical plasma is generated in a treating area (4) by means of dielectric barrier discharges between two electrodes (7, 8, 14), between which a bipolar alternating high voltage is applied, wherein the particles (30) of the bulk material (3) are conveyed through the treating area (4) between the electrodes (7, 8, 14) by means of a conveyer which also serves as an electrode (7, 14), and wherein the conveyer is engaged by a shaker (15) in such a way that the particles (30) of the bulk material (3) individually jump on the conveyer.

2. Method of claim 1, **characterized in that** the bulk material (3) is subjected to a gas flow (11) in the treatment area (4) and/or in the surroundings of treatment with the physical plasma.

3. Method of claim 1 or 2, **characterized in that** a temperature in the treating area (4) is captured an delimited to a predetermined maximum temperature.

4. Method of any of the claims 1 to 3, **characterized in that** the dielectric barrier discharges are created by voltage pulses of alternating polarity, bipolar voltage pulse pairs, or bipolar voltage pulse groups at a distance which is a multitude of their duration.

5. Apparatus for treating bulk material (3) consisting of a multitude of individual particles (30) with a physical plasma at atmospheric pressure, comprising a treating chamber (4) through which the particles (30) of the bulk material (3) are passing, and a plasma source comprising electrodes which includes electrodes (7, 8, 14) between which a high voltage generator (10) creates a high voltage, and which provides the physical plasma in the treating chamber, wherein the electrodes (7, 8, 14) of the plasma source are adjacent to the treating chamber (4), wherein at least one of the electrodes (8) is provided with a dielectric barrier, wherein at least one of the electrodes (8) is subjectable by the high voltage generator to a bipolar alternating high voltage, and wherein a conveyer extending through the treating chamber (4), which also serves as an electrode (7, 14), conveys the particles (30) of the bulk material (30) through the treating chamber (4), **characterized in that** a circulating device for the bulk material (3) is provided in the treating chamber (4), which has a shaker (15) engaging the conveyer for the bulk material (3) so that the conveyer conveys the particles (30) of the bulk material (3) through the treating chamber (4) in such a way that the particles are individually jumping on the conveyer.

6. Apparatus of claim 5, **characterized in that** a pressure gas source and/or a ventilator are present to subject the bulk material (3) to a gas flow (11) in the area and/or in the surroundings of the treatment with the physical plasma.

7. Apparatus of claim 5 or 6, **characterized in that** a temperature sensor captures the temperature in the area of the treatment with the physical plasma and that a temperature controller delimits a temperature of the bulk material (3) to a predetermined maximum temperature.

8. Apparatus of any of the claims 5 to 7, **characterized in that** an electrode (8) of the plasma source is arranged facing a conveyer belt (13) which serves as a counter-electrode.

9. Apparatus of any of the claims 5 to 7, **characterized in that** two electrodes (8) of the plasma source are arranged facing a conveyer belt (18) which serves as an intermediate electrode, the high voltage generator (10) generating the alternating high voltage between the two electrodes (8).

## Revendications

1. Procédé de traitement d'une matière en vrac (3) qui est formée par une pluralité de particules (30) individuelles, au moyen d'un plasma physique sous pression atmosphérique, le plasma physique étant généré dans une zone de traitement (4) au moyen de décharges de gaz, gênées diélectriquement, entre deux électrodes (7, 8, 14), entre lesquelles est appliquée une haute tension alternative bipolaire, lesdites particules (30) de la matière en vrac (3) étant déplacées au moyen d'un convoyeur, qui fait en même temps fonction d'électrode (7, 14), à travers la zone de traitement (4) entre les électrodes (7, 8, 14), et ledit convoyeur étant sollicité par un vibrateur (15), de telle sorte que les particules (30) de la matière en vrac (3) sautillent sous forme séparée sur le convoyeur.

2. Procédé selon la revendication 1, **caractérisé en ce que** la matière en vrac (3) est sollicitée par un flux de gaz (11) dans la zone de traitement (4) et/ou dans l'environnement du traitement avec le plasma physique.

3. Procédé selon la revendication 1 ou 2, **caractérisé en ce qu'**une température est enregistrée dans la zone de traitement (4) et est limitée à une température maximale prédéfinie.

4. Procédé selon l'une quelconque des revendications 1 à 3, **caractérisé en ce que** les décharges de gaz gênées diélectriquement sont dues à des impulsions de tension individuelles à polarité variable, espacées les unes des autres selon un multiple de leur durée, des paires d'impulsions de tension bipolaires ou des groupes d'impulsions de tension bipolaires.

5. Dispositif de traitement d'une matière en vrac (3) qui est formée par une pluralité de particules (30) individuelles, au moyen d'un plasma physique sous pression atmosphérique, comportant un espace de traitement (4), à travers lequel passent les particules (30) de la matière en vrac (3), et comportant une source de plasma, qui comporte des électrodes (7, 8, 14), entre lesquelles un générateur de haute tension (10) génère une haute tension, et qui met à disposition le plasma physique dans l'espace de traitement, dans lequel les électrodes (7, 8, 14) de la source de plasma sont adjacentes à l'espace de traitement (4), au moins l'une des électrodes (8) étant munie de l'écran diélectrique, au moins l'une des électrodes (8) pouvant être sollicitée par le générateur de haute tension avec une haute tension alternative bipolaire, et un convoyeur, qui passe à travers l'espace de traitement (4) et qui fait en même temps fonction d'électrode (7, 14), transportant les particules (30) de la matière en vrac (3) à travers l'espace de traitement (4), **caractérisé en ce qu'**il est prévu un dispositif de brassage pour la matière en vrac (3) dans l'espace de traitement (4), lequel comporte un vibrateur (15) entrant en contact avec le convoyeur pour la matière en vrac (3), de telle sorte que les particules (30) de la matière en vrac (3) sont transportées par le convoyeur à travers l'espace de traitement (4) en sautillant sous forme séparée sur le convoyeur.

6. Dispositif selon la revendication 5, **caractérisé en ce qu'**il est prévu une source de gaz sous pression et/ou un ventilateur pour solliciter la matière en vrac (3) avec un flux de gaz (11) dans la zone et/ou dans l'environnement du traitement avec le plasma physique.

7. Dispositif selon la revendication 5 ou 6, **caractérisé en ce qu'**un capteur de température enregistre la température dans la zone du traitement avec le plasma physique, et **en ce qu'**un système de commande de la température limite une température de la matière en vrac (3) à une température maximale prédéfinie.

8. Dispositif selon l'une quelconque des revendications 5 à 7, **caractérisé en ce qu'**une électrode (8) de la source de plasma est disposée en regard d'une bande transporteuse (13) faisant fonction de contre-électrode.

9. Dispositif selon l'une quelconque des revendications 5 à 7, **caractérisé en ce que** deux électrodes (8) de la source de plasma sont disposées en regard d'une bande transporteuse (13) faisant fonction d'électrode intermédiaire (14), un générateur de haute tension (10) générant une haute tension alternative entre les deux électrodes (8).
